# EUROPÄISCHE PATENTANMELDUNG

(11) **EP 0 890 560 A1**
(43) Veröffentlichungstag der Anmeldung: **13.01.1999**
(21) Anmeldenummer: 97810958.5
(22) Anmeldetag: 09.12.1997
(51) Int. Cl.: C04B 41/88, C22C 1/10

(54) **Keramik-Metall- oder Metall-Keramik-Komposite**

(30) Priorität: 11.07.1997 CH 1700/97
(71) Anmelder: EMPA Eidgenössische Materialprüfungs- und Forschungsanstalt, CH-8600 Dübendorf (CH)
(72) Erfinder: Englisch, Christian, 8600 Dübendorf (CH); Berroth, Karl, Dr., 8605 Gutenswil (CH)

(57) **Zusammenfassung**

Die vorliegende Erfindung betrifft Keramik-Metall- oder Metall-Keramik-Komposite, bestehend aus einer Keramikmatrix mit eingebetteten metallischen Komponenten oder aus in einer Metallmatrix eingebetteten Keramikpartikeln oder -strukturen, Verfahren zu deren Herstellung sowie ein Verfahren zum Erhöhen der Benetzbarkeit einer Keramikmatrix bzw. eingelagerter keramischer Partikel und Strukturen. Dabei wird vorgeschlagen, dass partiell an der Grenzfläche zwischen metallischen Komponenten und den Keramikpartikeln bzw. der Keramikmatrix anorganische oder organische Titan- und/oder Chromverbindungen angeordnet sind.

## Beschreibung

Die vorliegende Erfindung betrifft Keramik-Metall- oder Metall-Keramik-Komposite, bestehend aus einer Keramikmatrix mit eingebetteten metallischen Komponenten oder aus in einer Metallmatrix eingebetteten Keramikpartikeln oder -strukturen, Verfahren zu deren Herstellung sowie ein Verfahren zum Erhohen der Benetzbarkeit einer Keramikmatrix bzw. eingelagerter keramischer Partikel und Strukturen.

Keramikteile und Keramikschichten werden unter anderem in der Verschleiss-Schutztechnik, z.B. für Lagerkomponenten, Kolben und Bremssysteme, Dichtungsringe usw., d.h. für wechselnd mechanisch belastete Bauteile eingesetzt.

Als negative Eigenschaft erweist sich dabei die relativ hohe Sprödigkeit derartiger Keramikbauteile. Keramik-Metall-Komposite werden deshalb mit dem Ziel einer Verbesserung des mechanischen Verhaltens von Keramiken, insbesondere im Hinblick auf die geringe Bruchzähigkeit der reinen keramischen Komponenten entwickelt. Ein häufig angewendetes Verfahren ist die Infiltration, d.h. das 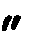 Auffüllen" von porösen, keramischen Matrizes mit intermetallischen Verbindungen oder metallischen Legierungen. Bei praktisch allen Verfahren wird die zu infiltrierende Komponente durch äusseren Druck in die Matrix gepresst. Beispiele sind die Infiltration von SiC mit Aluminium- und Magnesiumlegierungen. Die Möglichkeit einer drucklosen Infiltration ist bisher vor allem bei Verwendung von reinem Silizium oder siliziumreichen Verbindungen, wie z.B. MoSi₂ bekannt, die aufgrund des hohen Si-Anteils SiC benetzen, ohne mit SiC zu reagieren. Möglichkeiten einer drucklosen Infiltration mit Metallen, wie z.B. Silber, Aluminium, Kupfer, Eisen, Magnesium; Mangan sind bisher nicht bekannt. Ursache hierfür ist das schlechte Benetzungsverhalten von inerten Metallen, wie beispielsweise Silber auf SiC, d.h. die Metalle breiten sich nicht auf der Keramik aus, sondern ziehen sich zu einer Kugel bzw. Halbkugel zusammen, die Benetzungswinkel liegen also über 90°. Ebenfalls eine Ursache liegt in den bei den anderen Metallen als Silber mit SiC stattfindenden Reaktionen, welche zur Bildung von Siliciden bzw. Carbiden führen, was aufgrund der Sprödigkeit dieser Verbindungen erneut unerwünscht ist. Bei Druckinfiltrationsverfahren sind diese Reaktionen aufgrund der kurzen Prozesszeiten von einigen Sekunden vernachlässigbar bzw. teilweise sogar erwünscht, bei drucklosen Infiltrationsverfahren mit Prozesszeiten im Minuten- bzw. Stundenbereich müssen die stattfindenden Reaktionen kontrolliert werden.

Allen bekannten Verfahren lastet letztlich der Nachteil an, dass entweder Metallkomponenten bzw. metallische Legierungen unter Druck in einen Keramikkörper infiltriert werden, oder aber dass die infiltrierenden Verbindungen nichtmetallischen Charakter haben bzw. dass infolge langer Infiltrationszeiten die infiltrierenden Metallkomponenten mit dem Keramikkörper unter Ausbildung von spröden Verbindungen reagieren und somit der erwünschte Effekt von der Infiltrierung durch Metalle und Legierungen und deren Bestand im Komposit verloren geht.

Es ist daher eine Aufgabe der vorliegenden Erfindung Keramik-Metall-Komposite bzw. Verfahren zu deren Herstellung vorzuschlagen, in welchen eingelagerte bzw. infiltrierte metallische Komponenten bzw. Legierungen zu verbesserten mechanischen Eigenschaften führen, wie insbesondere eine gegenüber reinen Keramikkörpern höhere Bruchzähigkeit.

Die gestellte Aufgabe wird mittels Keramik-Metall- oder Metall-Keramik-Kompositen gemäss dem Wortlaut von Anspruch 1 bzw. mit-tels Verfahren zu deren Herstellung nach einem der Ansprüche 7 und folgende gelöst.

Vorgeschlagen wird, dass im Keramik-Metall- oder Metall-Keramik-Komposit, bestehend aus einer Keramikmatrix mit eingebetteten metallischen Komponenten oder aus in einer Metallmatrix eingebetteten Keramikpartikeln oder -strukturen wenigstens partiell an der Grenzflache zwischen metallischen Komponenten und den Keramikpartikeln bzw. der Keramikmatrix anorganische oder organische Titan- und/oder Chromverbindungen angeordnet sind.

Die Frage der Benetzung und Reaktivität von Legierungen mit SiC spielt auch beim Fügen von Metallen und Keramiken eine grosse Rolle. Seit einigen Jahrzehnten wird in der Löttechnik die Aktivierung von Lotlegierungen mit reaktiven Elementen, wie z.B. Titan, untersucht. Titan reagiert dabei mit SiC unter Ausbildung von Reaktionsschichten aus Siliciden und Carbiden bzw. Carbosiliciden. Die freiwerdende Reaktionsenergie bzw. die Modifikation der Grenzfläche durch Diffusionsvorgänge oder durch die neu gebildeten Schichten erlauben die Benetzung der Keramik durch das Lot. Die eigentliche Basislegierung des Lotes reagiert dabei nicht mit SiC und benetzt SiC auch nicht. Im Falle von SiC wird reines Silber bzw. eine Silberkupferlegierung häufig als Basislegierung vervendet.

Ueberraschenderweise hat sich nun gezeigt, dass der vorbeschriebene Ansatz erfolgreich für die Aktivierung von Metallkeramiksystemen übertragen werden kann, indem diese Aktivierung durch Titan oder Chrom bei der Herstellung von Kompositen er-reicht werden kann. Wie gezeigt werden konnte, können poröse Matrizes mit einer Porosität von 15 - 50 %, die Titan in geringen Mengen enthalten, wie beispielsweise 2 - 6 Gew.%, durch Silber bzw. eine Silbertitanlegierung mit ca. 2 % Titan drucklos infiltriert werden. Silber ist eines der wenigen Metalle, die nicht mit SiC reagieren. Ein weiteres Beispiel ist Zinn. Bei Untersuchungen an Kupferlegierungen konnte gezeigt werden, dass die Reaktivität von Kupfer mit SiC durch Zulegieren durch Zinn kontrolliert werden kann. Kupfer-Zinn-Legierungen stellen aufgrund der technologischen Bedeutung eine interessante Alternative zu Silber dar. Eine entsprechende Kontrolle der Reaktivität ist voraussichtlich ebenfalls mit Zink, Blei und Aluminium als Legierungselemente möglich. Angewendet werden sollen solche Komposite in der Verschleissschutztechnik, wo monolithisches SiC bereits eingesetzt wird, aber durch die Tendenz zu katastrophalem Sprödbruch Einschränkungen bestehen. Einsatzgebiete für schadenstolerante SiC-Metall-Verbundwerkstoffe werden in Bereichen gesehen, in denen dynamische Belastungen der Werkstoffe auftreten und ein Versagen, wenn überhaupt, nicht durch katastrophalen Sprödbruch erfolgen soll, sondern eine langsame Rissausbreitung bis zum Restbruch erwünscht ist (metallähnliches Verhalten).

Neben drucklosen Infiltrationsverfahren ist eine Infiltration mit Druck denkbar, wobei durch die Aktivierung eine Druckreduktion erreicht wird. Drucklose Schmelzinfiltrationsverfahren stellen ein 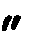 near-net-shape"-Verfahren dar und haben gegenüber Druckinfiltrationsverfahren den Vorteil, die Infiltration dickwandiger und komplexerer Bauteile in einfachen Anlagen preisgünstiger zu ermöglichen. Weitere Alternativen sind Sinterprozesse, bei denen durch die Aktivierung das Verdichtungsverhalten verbessert wird.

Die hergestellten Komposite sollten optimalerweise aus interpenetrierenden Netzwerken der metallischen und keramischen Komponenten bestehen bzw. aus einer metallischen Matrix mit einem hohen Volumenanteil an Keramik, wie beispielsweise 30 - 85% von SiC- Partikeln.

Die erhöhte Benetzbarkeit der Keramikkörper erfolgt somit durch Aktivierung der Grenzfläche der SiC-Matrix bzw. der Metalllegierung bei Infiltrationsverfahren bzw. des Grünkörpers bei Sinterprozessen durch die erfindungsgemäss erwähnten organischen oder anorganischen Titan- oder Chromverbindungen. Die Reaktionen dieser aktivierenden Verbindungen mit dem Keramikkörper bzw. mit SiC bzw. die entstehenden Reaktionsschichten erlauben eine gute Benetzung der keramischen Matrix durch das Metall. Als Basislegierungen werden Kupfer- und Silberlegierungen verwendet. Silber reagiert nicht mit SiC, im Fall der Kupferlegierung wird durch geeignete Legierungselemente, wie beispielsweise das obenerwähnte Zinn die Reaktivität mit SiC kontrolliert. Die Komposite bestehen aus interpenetrierenden Netzwerken des Metalls und der Keramik bzw. aus in einer Metallmatrix eingebetteten Keramikpartikeln, wie beispielsweise SiC-Partikeln in sehr dichter Packung oder anderen Keramikstrukturen.

Als Basislegierung dienen:
- Silber (100 - 50 Gew.%)-Kupfer (0 - 50 Gew.%)-Palladium (0 - 50 Gew.%)-Legierungen
- Kupfer und Kupferlegierungen mit
   Zinnanteilen von 0 - 40 Gew.-Anteil
   Bleianteile von 0 - 40 Gew.%
   Zinkanteile von 0 - 50 Gew.% und/oder
   Aluminiumanteilen von 0 - 20 Gew.%
- andere Legierungselemente, wie Phosphor, Nickel, Eisen, Mangan, Indium, usw. unter 10 Gew.%.

Die Mengenanteile Chrom bzw. Titan, bezogen auf die Basislegierungen, betragen in der Regel ca. 0,5 - 25 Gew.%.

Mögliche Herstellverfahren für das Herstellen von sogenannten Keramik-Metall-Kompositen oder Metall-Keramik-Kompositen sind nachfolgend beschrieben:

### 1. Infiltration von Metalllegierungen in poröse Keramikmatrizes, wie beispielsweise SiC-Matrizes:

**1a Matrixherstellung:** Poröse keramische Vorkörper mit einer Porosität von 15 - 70 % werden durch Verdichtung von Pulvermischungen, wie beispielsweise SiC-Pulver und organische oder anorganische Titan- oder Chromverbindungen sowie Binder und weitere Additive mittels Druck (uniaxiales Fressen, isostatisches Pressen, Heisspressen) oder durch Giessen (Schlickerguss, Druckguss) entsprechender Schlicker, d.h. Suspensionen von Pulver mit Additiven in Wasser, hergestellt. Man erhält dabei eine mehr oder weniger dichte Pulverpackung, ohne die Bildung eines kontinuierlichen Netzwerkes aus Keramikwerkstoff, wie beispielsweise SiC.
**1b Alternative Matrixherstellung:** Grünkörper aus Keramikpulver, wie SiC-Pulver und Sinterzusätzen werden durch Pressen oder Schlickerguss unter Verwendung geeigneter Additive hergestellt. Durch Sintern dieser Grünkörper erhält man poröse keramische Vorkörper mit einer Porosität von 5 - 70%, die aus mehr oder weniger stark gebundenen, 3-dimensionalen Keramiknetzwerken bestehen. Durch Abscheiden aus der Gasphase, wie beispielsweise CVD oder PVD oder aus flüssigen Suspensionen wird die Keramikoberfläche in den Poren mit anorganischen oder organischen Titan- oder Chromverbindungen beschichtet.
**1c:** Die so gemäss 1a und 1b hergestellten porösen Matrizes können drucklos bzw. unter Druck, wie beispielsweise beim Schleuderguss oder 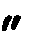 Squeeze-casting", infiltriert werden. Die porösen Matrizes, auch als Preforms bezeichnet, werden als 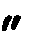 verlorene Kerne" in die Giessformen eingelegt. Die Infiltrationstemperatur liegt knapp oberhalb des Schmelzpunktes der Legierung, d.h. ca. 10 - 100°C darüber. Die infiltrierenden Legierungen können zusatzlich ebenfalls mit Titan- oder Chromverbindungen aktiviert werden. Die Reaktionen der in den Vorkörpern oder Legierungen enthaltenen Chrom- oder Titanverbindungen beim Hochheizen bzw. bei Erreichen der Infiltrationstemperatur führen zu der Ausbildung von Reaktionsschichten auf den Keramikteilchen bzw. der Keramikoberfläche. Die dabei freiwerdende Reaktionsenergie bzw. die Aenderung der Grenzflächenstruktur durch Diffusionsvorgänge bzw. durch die neu gebildeten Schichten selbst erlauben die Benetzung der Keramik durch das Metall bzw. die Metalllegierungen.

### 2. Sinterprozesse:

**2a** Grünkörper aus Keramik, wie SiC, Sinterzusätzen sowie der Basislegierung und anorganischen oder organischen Chrom- oder Titanverbindungen werden hergestellt. Dies erfolgt durch pulvertechnologische Verfahren, wie beispielsweise durch Schlikkerguss, Spritzguss oder Extrusion. Die hergestellten Grünkörper mit einer Porosität unter 50% werden nach Ausbrennen der organischen Zusätze über Sinterprozesse verdichtet, beispielsweise durch druckloses Sintern, Heisspressen, heissisostatisches Pressen oder Flüssigphasensintern. Die beim Sinterprozess stattfindende Aenderung der Grenzflächenstruktur bzw. die freiwerdende Reaktionsenergie ermöglicht, wie bei den Infiltrationsprozessen, eine Benetzung der Keramik dtirch das Metall.

Anhand des nachfolgenden Beispieles der Benetzung und Infiltration von SiC durch Silber mittels Titanaktivierung sowie der ebenfalls in diesem Zusammenhang beigefügten Figuren soll die vorliegende Erfindung beispielsweise näher erläutert werden.

Dabei zeigen:
- Fig. 1: den Kontaktbereich titanaktivierten Silbers mit rekristallisiertem SiC,
- Fig. 2: eine mit Silber infiltrierte titanaktivierte SiC Matrix, und
- Fig. 3: einen Teilausschnitt aus Fig. 2, d.h. ein SiC-Korn mit Reaktionsschicht.

### Benetzung und Infiltration von SiC durch Silber mittels Titan-Aktivierung:

### Experimentelle Methoden:

### Titanaktivierung der Legierung:

Als Matrix wurde rekristallisiertes SiC mit einer Porosität von 17% und einem mittleren Porendurchmesser von 22µm verwendet bzw. einfache Pulverschüttungen aus SiC-Pulver mit einem mittleren Partikeldurchmesser von 105µm. Als Legierung wurde das als 0,2 mm dicke Folie vorliegende Aktivlot CB2 von Degussa eingesetzt, welches neben Silber als Basismaterial 4 Gew.% Titan enthält. Teilweise wurde der Titangehalt auf 2 Gew.% reduziert, indem auf eine Silberschicht eine entsprechende Schicht des Aktivlotes aufgebracht wurde. Die Legierung mit einem Titangehalt von 2 Gew.% bildete sich dann in-situ.

### Titanaktivierung der Matrix:

Hergestellt wurden pillenförmige Matrizes durch Vermischen des für die Pulverschüttungen eingesetzten SiC-Pulvers mit 5,3 Gew.% Titan im Turbula-Mischer, was einem Titangehalt von 3 Gew.%, bezogen auf einen 40%-igen Volumenanteil Silber, entsprach. Die Verdichtung erfolgte durch uniaxiales Pressen mit einem Pressdruck von 32 MPa und anschliessender kaltisostatischer Nachverdichtung bei einem Pressdruck von 1500 bar. Dabei wurden 4 Gew.% Paraffin als Binder verwendet, welches nach dem Pressen bei 200°C ausgedampft wurde. Die so hergestellten Matrizes wiesen eine Porosität von 40% und einen mittleren Porendurchmesser von 15µm auf. Das Silber wurde in Form von 3 mm dicken Scheiben auf die Matrizes gelegt. Die Infiltrationsversuche wurden im Hochvakuum (10⁻⁶ mbar) bei 1000°C bei Haltezeiten von 1 h durchgeführt. Die Proben wurden anschliessend keramographisch untersucht.

### Ergebnisse:

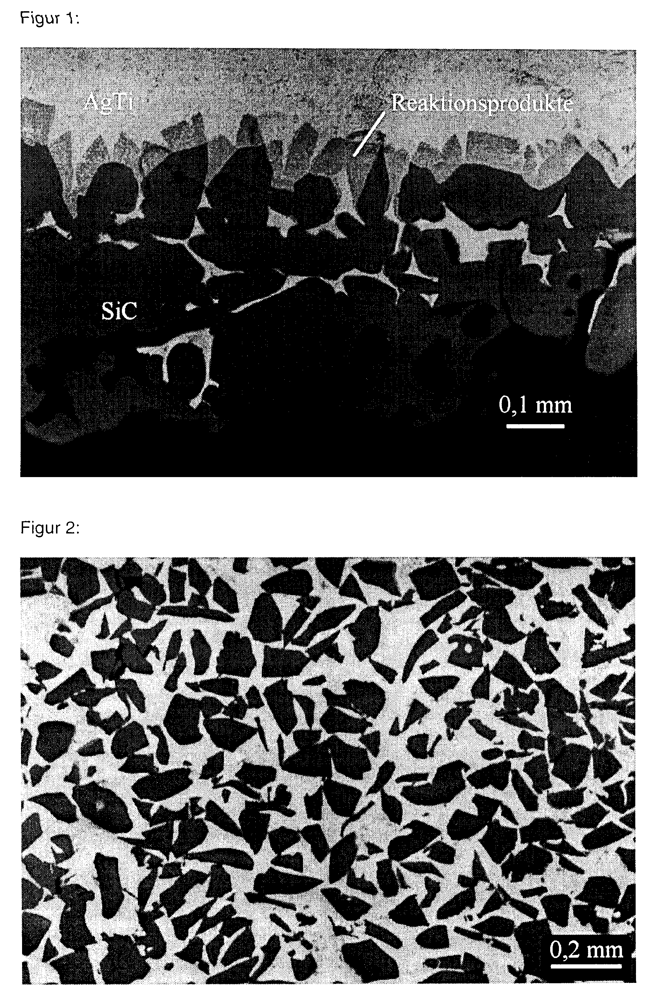

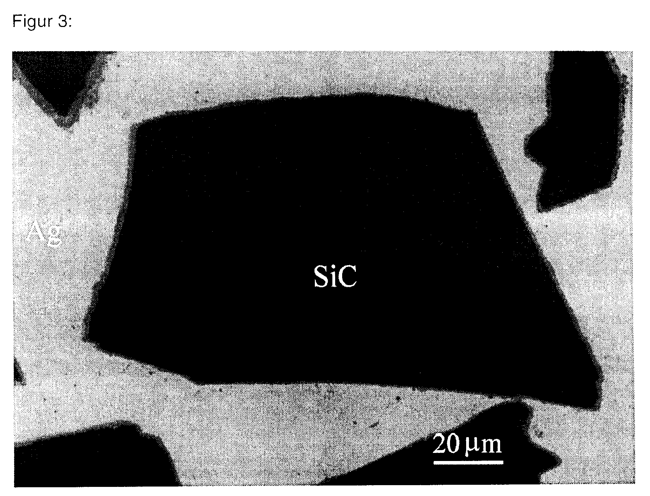

Eine Aktivierung durch Titan aus der Lotlegierung führt zwar zu einer Benetzung der Matrizes durch die Legierung, eine Infiltration findet aber nur in der äussersten Randschicht statt, da die Porenöffnungen durch die entstehenden festen Reaktionsprodukte verschlossen werden. Fig. 1 zeigt einen Ausschnitt des AgTi-SiC-Kontaktbereiches. Hingegen wird ein gutes Benetzungs- und Infiltrationsverhalten von unlegiertem Silber durch in-situ Aktivierung mit dem in der SiC-Matrix enthaltenen Titan erreicht. Es kommt dabei zur Ausbildung dünner und gleichmässiger Reaktionsschichten auf den SiC-Körnern, ohne dass die Porenkanäle verschlossen werden. Gefügeausschnitte sind in Fig. 2 und 3 dargestellt. Es konnten somit Komposite mit einem SiC-Anteil bis 70 Vol% hergestellt werden.

### Zusammenfassung:

Am System Ag/SiC als Beispiel für ein nicht reaktiviertes System wurde die Möglichkeit einer Benetzung und Infiltration poröser SiC-Matrizes mittels einer Aktivierung mit Titan untersucht. Komposite mit einem SiC-Anteil bis 70 Vol% konnten durch Aktivierung des Systems mit in der SiC-Matrix enthaltenem Titan hergestellt werden.

Die oben angeführten Verfahrensbeispiele sowie das Beispiel der Benetzung und Infiltration von SiC durch Silber mittels Titanaktivierung sollen lediglich dazu dienen, den Grundgedanken der vorliegenden Erfindung beispielsweise näher zu erläutern und stellen keine Einschränkung des Grundgedankens dar. Grundsätzlich geht es ja darum die Benetzbarkeit poröser Matrizes zu verbessern bzw. die Infiltration mittels metallischen Komponenten oder Metalllegierungen zu ermöglichen. Bekanntlich ist eine drucklose Infiltration poröser Matrizes durch Metalle oder Legierungen ohne eine Aktivierung mit Titan- oder Chromverbindungen nicht möglich. Drucklose Infiltrationsverfahren bieten den Vorteil, komplexe Bauteile, die auch stark unterschiedliche Wandstärken aufweisen können, in einfachen und preiswerten Anlagen produzieren zu können. Druckinfiltrationsverfahren sind ebenso wie Sinterprozesse grundsatzlich auch ohne Aktivierung möglich. Der Vorteil der Aktivierung liegt hier allgemein in der Verbesserung des Benetzungsverhaltens zwischen Metall und Keramik. Dies führt zu einem verbesserten Verdichtungsverhalten und zu einer verringerten Rissbildung an den Metallkeramikgrenzflächen und damit zu Werkstoffen mit besserem Eigenschaftsprofil.

Als Fazit ergibt sich somit, dass es erfindungswesentlich ist, dass in Keramik-Metall-Komposite oder Metall-Keramik-Kompositen an den Grenzflächen zwischen den Keramikteilen und dem Metall bzw. den Metalllegierungen organische oder anorganische Chrom- oder Titanverbindungen angeordnet sind.

## Patentansprüche

1. Keramik-Metall- oder Metall-Keramik-Komposite bestehend aus einer Keramikmatrix mit eingebetteten metallischen Komponenten oder aus in einer Metallmatrix eingebetteten Keramikpartikeln bzw. -strukturen, dadurch gekennzeichnet, dass wenigstens partiell an der Grenzfläche zwischen metallischen Komponenten und den Keramikpartikeln bzw. der Keramikmatrix anorganische Titan- und/oder Chromverbindungen angeordnet sind.

2. Komposite, insbesondere nach Anspruch 1, dadurch gekennzeichnet, dass der Mengenanteil Titan oder Chrom 0,5 - 25 Gew.%, bezogen auf die metallische Matrix bzw. die metallische Komponente, beträgt.

3. Komposite, insbesondere nach einem der Ansprüche 1 oder 2, dadurch gekennzeichnet, dass der Keramikanteil 30 - 95 Vol.% beträgt sowie als metallische Komponente bzw. als metallische Legierung Silber, Kupfer, eine Silber-Kupfer-Legierung oder eine Kupfer-Legierung vorliegt.

4. Komposite, insbesondere nach einem der Ansprüche 1 bis 3, dadurch gekennzeichnet, dass die metallische Komponente bzw. die Metalllegierung, ausgewahlt aus der nachfolgenden Liste vorliegt:
- Silber (100 - 50 Gew.%)-Kupfer (0 - 50 Gew.%)-Palladium(0 - 50 Gew.%)-Legierung
- Kupfer- und Kupferlegierungen mit
Zinnanteil 0 - 40 Gew.%-Anteil
Bleianteil 0 - 40 Gew.%
Zinkanteil 0 - 50 Gew.%
Aluminiumanteil 0 - 20 Gew.%, und/oder
- andere Legierungselemente, wie Phosphor, Nickel, Eisen, Mangan, Indium.

5. Keramik-Metall-Komposite, dadurch gekennzeichnet, dass die Keramikmatrix aus SiC besteht mit einem SiC-Anteil von 30 - 95 Vol.% und der Rest weitgehendst metallische Komponente ist.

6. Metall-Keramik-Komposite, dadurch gekennzeichnet, dass Silber, eine Silber-Kupfer-Legierung, Kupfer und/oder eine Kupfer-Legierung als Matrix vorliegt, sowie Keramikanteilen, beispielsweise in Form von SiC-Fasern.

7. Verfahren zur Herstellung von Keramik-Metall- oder Metall-Keramik-Kompositen, dadurch gekennzeichnet, dass in eine Keramikmatrix oder eine Metallmatrix organische oder anorganische Titan- oder Chromverbindungen eingebracht werden, worauf anschliessend drucklos oder unter Druck metallische Komponenten oder Metalllegierungen in den Keramikkörper infiltriert werden bzw. Keramikkomponenten bzw. Keramikfasern in die Metallmatrix eingegeben werden.

8. Verfahren, insbesondere nach Anspruch 7, dadurch gekennzeichnet, dass zunächst bei der Matrixherstellung, wie beispielsweise bei der Herstellung eines keramischen Vorkörpers durch Verdichten von Pulvermischungen oder durch Giessen von Keramikpulversuspensionen und Additiven in Wasser, organische oder anorganische Titan- oder Chromverbindungen miteingeführt werden, wodurch eine mehr oder weniger dichte Pulverpackung aus Keramikpulver erhalten wird, worauf drucklos oder unter Druck knapp oberhalb des Schmelzpunktes des Metalls bzw. der Metalllegierung diese in die poröse Matrix infiltriert wird.

9. Verfahren, insbesondere nach Anspruch 7, dadurch gekennzeichnet, dass zunächst ein Grünkörper aus Keramikpulver oder -fasern und Sinterzusätzen durch Pressen oder Schlickerguss unter Verwendung geeigneter Additive hergestellt wird, wobei dieser poröse, keramische Vorkörper nach einem Sinterprozess aus mehr oder weniger stark gebundenen dreidimensionalen Keramiknetzwerken besteht, worauf durch Abscheiden aus der Gasphase, beispielsweise mittels CVD- oder PVD-Verfahren oder aus flüssigen Suspensionen die Keramikoberfläche in den Poren mit anorganischen oder organischen Titan- oder Chromverbindungen beschichtet wird, worauf die so hergestellte poröse Matrix drucklos oder unter Druck mit dem Metall bzw. einer Metalllegierung knapp oberhalb des Schmelzpunktes des Metalls oder der Legierung infiltriert wird.

10. Verfahren, insbesondere nach einem der Ansprüche 7 bis 9, dadurch gekennzeichnet, dass die infiltrierenden Legierungen bzw. Metallkomponenten zusätzlich ebenfalls mit Titan- oder Chromverbindungen aktiviert werden.

11. Verfahren zur Herstellung von Keramik-Metall- oder Metall-Keramik-Kompositen, dadurch gekennzeichnet, dass zunächst ein Grünkörper aus Keramikpulver oder -fasern, Sinterzusätzen, der Metallkomponente bzw. der Metalllegierung und anorganischen oder organischen Chrom- oder Titanverbindungen mittels pulvertechnologischen Verfahren hergestellt wird, wie beispielsweise durch Pressen, Schlickerguss, Spritzguss oder Extrusion.

12. Verfahren, insbesondere nach Anspruch 11, dadurch gekennzeichnet, dass der hergestellte Grünkörper mit einer Porosität unter ca. 50% nach Ausbrennen der organischen Zusätze über Sinterprozesse verdichtet wird, beispielsweise durch druckloses Sintern, Heisspressen, heissisostatischem Pressen oder Flüssigphasensintern, wobei die beim Sinterprozess stattfindende Aenderung der Grenzflächenstruktur bzw. die freiwerdende Reaktionsenergie eine Benetzung der Keramik durch die Metallkomponente bzw. Legierung ermöglicht.

13. Verfahren zum Erhöhen der Benetzbarkeit einer Keramikmatrix zur Herstellung von Keramik-Metall-Kompositen, dadurch gekennzeichnet, dass in den Keramikkörper organische oder anorganische Titan- oder Chromverbindungen eingeführt werden, welche die Benetzbarkeit der Grenzflächen im Keramikkörper durch die Metallkomponente bzw. Metalllegierung erhöhen.
